# EUROPÄISCHE PATENTANMELDUNG

(11) **EP 4 007 111 A1**
(43) Veröffentlichungstag der Anmeldung: **01.06.2022**
(21) Anmeldenummer: 20210710.8
(22) Anmeldetag: 30.11.2020
(51) Int. Cl.: H02J 3/38

(54) **VERFAHREN ZUM DYNAMISCHEN CLUSTERN VON ELEKTRISCHEN ANLAGEN, INSBESONDERE ZUR ERBRINGUNG VON SYSTEMDIENSTLEISTUNGEN**

(71) Anmelder: Wobben Properties GmbH, 26607 Aurich (DE)
(72) Erfinder: BLAAK, Isabel, 53347 Alfter (DE); BROMBACH, Johannes, 13437 Berlin (DE)
(74) Vertreter: Eisenführ Speiser

(57) **Zusammenfassung**

Die vorliegende Erfindung betrifft ein Verfahren zum Steuern eines elektrischen Verteilnetzes, umfassend die Schritte: Bestimmen wenigstens einer Größe, die einen Zustand des elektrischen Verteilnetzes beschreibt; Zusammenfassen mehrerer elektrischer Anlagen, insbesondere mehrerer regenerativer Erzeuger, des elektrischen Verteilnetzes zu einem virtuellen Kraftwerk, insbesondere unter Berücksichtigung der Größe; Festlegen eines Regelgebietes innerhalb des elektrischen Verteilnetzes für das virtuelle Kraftwerk; Festlegen einer Steuereinheit einer elektrischen Anlage des virtuellen Kraftwerks als Hauptsteuereinheit; Steuern des Regelgebietes mit der Hauptsteuereinheit des virtuellen Kraftwerkes.

## Beschreibung

Die vorliegende Erfindung betrifft ein Verfahren zum Steuern eines elektrischen Verteilnetzes.

Elektrische Verteilnetze, wie bspw. das deutsche Übertragungsnetz oder das europäische Verbundnetz, und deren Betriebsführung, insbesondere durch einen Netzbetreiber, sind allgemein bekannt.

Unter anderem teilt der Netzbetreiber für die Betriebsführung das elektrische Verteilnetz in starren Zonen ein, sogenannte Regelzonen.

Nachteilig bei einer solchen Betriebsführung, die auf starren Regelzonen basiert, ist insbesondere, dass etwaige Systemdienstleistungen (kurz: SDL) nur bedingt erfüllt oder nicht für andere Regelzonen bereitgestellt werden können.

Unter Systemdienstleistungen sind dabei insbesondere all jene für die Versorgungsqualität eines elektrischen Verteilnetzes notwendigen Dienste zu verstehen, die Netzbetreiber neben der Übertragung und Verteilung elektrischer Energie zusätzlich erbringen. Solche Dienste sind unter anderem Frequenzhaltung der Netzfrequenz, Spannungshaltung, Versorgungswiederaufbau, Betriebsführung oder Netzengpassmanagement.

Aufgabe der vorliegenden Erfindung ist es daher, eines der oben genannten Probleme zu adressieren, den allgemeinen Stand der Technik zu verbessern oder eine Alternative zu bisher Bekanntem bereitzustellen. Insbesondere soll eine verbesserte Steuerbarkeit eines elektrischen Verteilnetzes bereitgestellt werden, die die Erbringung von Systemdienstleistungen verbessert.

Erfindungsgemäß wird somit ein Verfahren zum Steuern eines elektrischen Verteilnetzes vorgeschlagen, umfassend die Schritte: Bestimmen wenigstens einer Größe, die einen (Netz-)Zustand des elektrischen Verteilnetzes beschreibt; Zusammenfassen mehrerer elektrischer Anlagen, insbesondere mehrerer regenerativer Erzeuger, des elektrischen Verteilnetzes zu einem virtuellen Kraftwerk; Festlegen eines Regelgebietes innerhalb des elektrischen Verteilnetzes für das virtuelle Kraftwerk; Festlegen einer Steuereinheit einer elektrischen Anlage des virtuellen Kraftwerks als Hauptsteuereinheit; Steuern des Regelgebietes mit der Hauptsteuereinheit des virtuellen Kraftwerkes.

Es wird somit insbesondere ein Verfahren zum dynamischen Clustern von elektrischen Anlagen vorgeschlagen, insbesondere zur Erbringung von Systemdienstleistungen.

In einem ersten Schritt wird hierfür ein Netzzustand des elektrischen Verteilnetzes mittels wenigstens einer Größe bestimmt.

Unter einem Netzzustand werden dabei insbesondere alle, das elektrische Verteilnetz beschreibenden Größen verstanden, die das elektrische Verteilnetz wenigstens regional beschreiben.

Die, das elektrische Verteilnetz beschreibende Größe gibt also insbesondere eine Information über einen, bevorzugt aktuellen, Zustand des elektrischen Verteilnetzes wieder, bspw. ob ein (n-1)-Kriterium erfüllt ist, eine Ausdehnung des elektrischen Verteilnetzes, eine aktuelle Gesamtlast des elektrischen Verteilnetzes, eine Anzahl unterlagerter Netzebenen, einen Anteil an steuerbaren Teilen des elektrischen Verteilnetzes, eine Art des elektrisches Verteilnetzes, bspw. vermascht, ring oder radial, und/oder eine aktuelle Einspeisung der, insbesondere aller, Erzeuger.

In einem weiteren Schritt werden mehrere elektrische Anlagen, insbesondere mehrerer regenerativer Erzeuger, des elektrischen Verteilnetzes zu einem virtuellen Kraftwerk zusammengefasst.

Unter einer elektrischen Anlage werden hierin insbesondere Zusammenschlüsse elektrischer Betriebsmittel verstanden, die als Ganzes oder in einzelnen Teilen dem Anwenden elektrischer Energie, also insbesondere dem Erzeugen, Verteilen und Speichern von Energie, dienen. Hierunter sind insbesondere auch all jene Einspeiser, also Erzeuger, Speicher und Wandler, zu verstehen, die dazu eingerichtet sind, insbesondere mittels eines Umrichters, elektrische Leistung mit einem elektrischen Versorgungsnetz auszutauschen. Es handelt sich also bei den hierin beschriebenen elektrischen Anlagen insbesondere um Windenergieanlagen, Photovoltaikanlagen, elektrische Speicher und weitere umrichterbasierte Netzinstallationen, wie bspw. STATCOMS oder FACTS, sowie Zusammenschlüsse davon.

Insbesondere sollen dabei auch die Möglichkeiten zur Steuerung, bspw. Art, Qualität oder ob überhaupt steuerbar, dieser Anlagen im Aggregat berücksichtigt werden.

Es wird also insbesondere vorgeschlagen, mehrere elektrische Anlagen, bevorzugt Windenergieanlagen, zu einer funktionalen Einheit, insbesondere zu einem virtuellen Kraftwerk, zusammenzufassen.

In einem weiteren Schritt wird ein Regelgebiet innerhalb des elektrischen Verteilnetzes festgelegt, für welches das virtuelle Kraftwerk zuständig ist.

Bevorzugt liegt das virtuelle Kraftwerk, und insbesondere alle elektrischen Anlagen des virtuellen Kraftwerks, innerhalb dieses Regelgebietes.

Das Festlegen des Regelgebietes kann dabei sowohl vor als auch nach dem Zusammenfassen der elektrischen Anlagen zu dem virtuellen Kraftwerk erfolgen.

Bevorzugt erfolgt das Festlegen des Regelgebietes vor dem Zusammenfassen der elektrischen Anlagen zu dem virtuellen Kraftwerk und unter Berücksichtigung wenigstens einer Größe, die einen Zustand des elektrischen Verteilnetzes beschreibt.

Eine solche Größe kann bspw. eine Gesamtnetzlast sein.

Es wird also insbesondere vorgeschlagen, dynamisch eine netzzustandsgerechte Aggregation innerhalb eines elektrischen Verteilnetzes vorzunehmen, um Systemdienstleistungen bereitzustellen.

In einem weiteren Schritt, also insbesondere nach der netzzustandsgerechten Aggregation, wird eine Steuereinheit einer elektrischen Anlage des virtuellen Kraftwerks als Hauptsteuereinheit festgelegt.

Eine Steuereinheit einer elektrischen Anlage des virtuellen Kraftwerks wird also die Funktion eines Masterreglers zugewiesen.

Diese Steuereinheit dient dann als Master aller elektrischen Anlagen innerhalb des virtuellen Kraftwerks und bevorzugt aller elektrischen Anlagen des Regelgebietes, also insbesondere aller Erzeugungseinheiten, Speichersystemen und Lasten des Regelgebietes.

Das festgelegte Regelgebiet wird also insbesondere durch eine Steuereinheit einer elektrischen Anlage gesteuert, die als Hauptsteuereinheit des virtuellen Kraftwerks ausgebildet ist.

Vorzugsweise werden die vorstehend beschriebenen Schritte, insbesondere das Bestimmen der wenigstens einen Größe, die einen Zustand des elektrischen Verteilnetzes beschreibt; das Zusammenfassen der mehreren elektrischen Anlagen zu dem virtuellen Kraftwerk; das Festlegen des Regelgebietes innerhalb des elektrischen Verteilnetzes für das virtuelle Kraftwerk und das Steuern des Regelgebietes mit der Hauptsteuereinheit des virtuellen Kraftwerkes, wiederholt.

Es wird also insbesondere ein dynamisches Verfahren vorgeschlagen, bei dem das Regelgebiet und/oder das virtuelle Kraftwerk entsprechend der vorherrschenden Bedingungen, insbesondere des Netzzustandes, ständig neu bestimmt werden, bspw. alle 30 Minuten neu bestimmt werden.

Hierfür werden die vorstehend oder nachstehend beschriebenen Verfahrensschritte ständig und/oder iterativ wiederholt.

Alternativ oder Zusätzlich wird zudem die Hauptsteuereinheit, insbesondere ebenfalls, dynamisch, und insbesondere wiederholend neu, festgelegt.

Vorzugsweise ist die Hauptsteuereinheit dazu ausgebildet und/oder dazu eingerichtet, Sollwerte für weitere Steuereinheiten, insbesondere von Erzeugern und/oder Verbrauchern und/oder Speichersystemen innerhalb des virtuellen Kraftwerkes, vorzugeben, um das virtuelle Kraftwerk zu steuern.

Die Steuereinheit einer elektrischen Anlage, die als Hauptsteuereinheit festgelegt ist, ist also insbesondere dazu ausgebildet und/oder dazu eingerichtet, als Masterregler des virtuellen Kraftwerkes zu arbeiten.

Das Aggregieren und das Steuern des virtuellen Kraftwerks kann also bspw. durch einen Windparkregler erfolgen, der als Master für die anderen Erzeugungseinheiten, Speichersysteme und Lasten fungiert.

Vorzugsweise ist die Hauptsteuereinheit dazu ausgebildet und/oder dazu eingerichtet, mit einer Steuereinheit eines Netzbetreibers oder Vermarkters des elektrischen Verteilnetzes, bevorzugt exklusiv und/oder für das virtuelle Kraftwerk, zu kommunizieren.

Die Steuereinheit einer elektrischen Anlage, die als Hauptsteuereinheit festgelegt ist, kommuniziert also insbesondere exklusiv und stellvertretend für das virtuelle Kraftwerk bzw. das Regelgebiet mit dem Netzbetreiber des elektrischen Verteilnetzes.

Nur die Hauptsteuereinheit kommuniziert also mit dem Leitsystem des Netzbetreibers oder des SDL-Vermarkters und gibt etwaige Steuerbefehle an die weiteren Anlagen des virtuellen Kraftwerkes.

Vorzugsweise ist die Hauptsteuereinheit dazu ausgebildet und/oder dazu eingerichtet, wenigstens einen der nachfolgenden Parameter einer Liste zu verarbeiten, bestehend aus:
- Betriebszustand einer elektrischen Anlage, insbesondere des virtuellen Kraftwerks;
- Verfügbarkeit und Prognose der von einer elektrischen Anlage, insbesondere des virtuellen Kraftwerks; zu erbringende Systemdienstleistung, bspw. eine Primärregelleistung oder eine Minutenreserve;
- Aktuelle Wirk- und/oder Blindleistung einer elektrischen Anlage, insbesondere des virtuellen Kraftwerks;
- Verfügbare Wirkleistung einer elektrischen Anlage, insbesondere des virtuellen Kraftwerks;
- Verfügbare Blindleistung einer elektrischen Anlage, insbesondere des virtuellen Kraftwerks;
- Prognose verfügbarer Leistung und Fahrplan des Regelgebietes;
- SOC-Wert von angeschlossenen Speichersystemen, wobei der SOC-Wert den sogenannten state of charge eines elektrischen Speichers beschreibt.

Die Haupsteuereinheit ist also insbesondere dazu eingerichtet, das gesamte Regelgebiet bzw. sämtlicher Erzeuger des Regelgebietes so zu steuern, dass das Regelgebiet ein Maximum an Systemdienstleistungen aufweist.

Vorzugsweise ist die Hauptsteuereinheit dazu ausgebildet und/oder dazu eingerichtet, Sollwerte für weitere Steuereinheiten, insbesondere von elektrischen Anlagen des virtuellen Kraftwerkes, vorzugeben, insbesondere unter Berücksichtigung wenigstens einem der nachfolgenden Werte einer Liste, bestehend aus:
- Anlagenleistung, insbesondere installierte Windparkleistung;
- Auslastung durch andere Systemdienstleistungen;
- Priorität von anderen Systemdienstleistungen;
- Verfügbare Wirkleistung und/oder Reserve bis zur verfügbaren Leistung;
- Netzsensitivität und/oder Netzauslastung;
- Sensitivität auf einen zu regelnden Punkt, insbesondere den Standort des virtuellen Kraftwerkes, insbesondere zur Spannungshebung innerhalb des Regelgebietes;
- Prognose einer verfügbaren Leistung.

Es wird also insbesondere vorgeschlagen, dass die Hauptsteuereinheit Sollwerte für andere Steuereinheiten von elektrischen Anlagen innerhalb des Regelgebietes vorgibt, insbesondere unter Berücksichtigung der vorstehend oder nachstehend beschriebenen Werte und/oder Parameter.

Vorzugsweise sind die mehren elektrischen Anlagen als Windenergieanlage und/oder als Windpark ausgebildet und/oder das Zusammenfassen der mehreren Erzeuger in Abhängigkeit einer Größe eines Regelgebietes erfolgt, für welches das virtuelle Kraftwerk zuständig ist.

Vorzugsweise umfasst das Verfahren ferner die Schritte: Durchführen einer, insbesondere automatischen, topologischen Untersuchung des elektrischen Verteilnetzes, insbesondere in Hinblick auf eine Netzstruktur und Durchführen von Schalthandlungen innerhalb des elektrischen Verteilnetzes unter Berücksichtigung der topologischen Untersuchung, insbesondere so, dass ein Netzzustand beibehalten wird.

Es wird also insbesondere vorgeschlagen, dass während der Ausführung des vorstehend oder nachstehend beschriebenen Verfahrens eine topologische Untersuchung, insbesondere des Regelgebietes, durchgeführt wird, mittels derer Schalter bzw. Schaltanlagen so betätigt werden, dass ein, insbesondere der zuvor bestimmte, Netzzustand beibehalten wird.

Die Untersuchung kann bspw. durch Messeinheit oder Computerprogramme erfolgen.

Erfindungsgemäß wird ferner ein Verfahren zum Steuern eines, insbesondere regenerativen, Erzeugers innerhalb eines elektrischen Verteilnetzes vorgeschlagen, umfassend die Schritte: Empfangen eines elektrischen Ortes des Regelgebietes, insbesondere von der Hauptsteuereinheit; Empfangen eines Sollwertes, insbesondere von der Hauptsteuereinheit, der einen Sollwert für eine einzuspeisende Wirk- und/oder Blindleistung vorgibt; Bestimmen eines elektrischen Abstandes zwischen dem Erzeuger und dem Regelknoten; Austauschen einer elektrischen Wirk- und/oder Blindleistung mit dem elektrischen Verteilnetz in Abhängigkeit des Sollwertes und des elektrischen Abstandes.

Der Erzeuger ist dabei insbesondere als Windenergieanlage oder bevorzugt als Windpark ausgebildet.

Dem Erzeuger wird, bspw. durch einen Netzbetreiber, in einem ersten Schritt mitgeteilt, auf welchen Punkt im elektrischen Verteilnetz, insbesondere innerhalb des Regelgebietes, gesteuert werden soll.

Es wird also insbesondere auch vorgeschlagen, dass, insbesondere die elektrischen Anlagen des virtuellen Kraftwerkes, die als Erzeuger ausgebildet, sich innerhalb des Regelgebietes des virtuellen Kraftwerkes befinden und/oder betriebsbereit sind und/oder eine Spannung an den Anlagenklemmen aufweisen, die mit dem elektrischen Verteilnetz verbunden sind.

Die Steuerung erfolgt dann über das Leitsystem des Netzbetreibers oder bevorzugt durch eine vorstehend oder nachstehend beschriebene Hauptsteuereinheit einer weiteren elektrischen Anlage des virtuellen Kraftwerks.

In einem nächsten Schritt wird, bspw. durch die Anlagensteuereinheit, ein Sollwert von der Hauptsteuereinheit empfangen.

Bevorzugt ist der Sollwert ein Sollwert für eine einzuspeisende Wirk- und/oder Blindleistung.

Zudem bestimmt der Erzeuger einen elektrischen Abstand zwischen dem Erzeuger und dem empfangenen elektrischen Ort. Der elektrische Ort kann insoweit auch als Regelknoten verstanden werden, auf den der Erzeuger regelt.

In Abhängigkeit des Sollwertes und dieses elektrischen Abstandes tauscht der Erzeuger dann Wirk- und/oder Blindleistung derart mit dem elektrischen Verteilnetz aus, dass es bevorzugt zu einer Spannungshebung an dem elektrischen Ort kommt.

Es wird also insbesondere ein Austauschen einer elektrischen Wirk- und/oder Blindleistung mit dem elektrischen Verteilnetz in Abhängigkeit des Sollwertes und des elektrischen Abstandes vorgeschlagen.

Vorzugsweise wird das elektrische Verteilnetz mittels eines vorstehend oder nachstehend beschriebenen Verfahrens gesteuert.

Vorzugsweise erfolgt das Austauschen der Wirk- und/oder Blindleistung mit dem elektrischen Verteilnetz unter Berücksichtigung einer Sensitivität des elektrischen Verteilnetzes und/oder eines Freiheitsgrades des elektrischen Verteilnetzes.

Die elektrischen Anlagen, insbesondere die Erzeuger, des virtuellen Kraftwerkes sind also bevorzugt, bspw. mittels einer Steuereinheit, dazu eingerichtet, eine Sensitivität des elektrischen Verteilnetzes und/oder einen Netzfreiheitsgrad des elektrischen Verteilnetzes zu erfassen und unter Berücksichtigung dessen, Wirk- und/oder Blindleistung mit dem elektrischen Verteilnetz auszutauschen.

Erfindungsgemäß wird ferner eine Windenergieanlage vorgeschlagen, umfassend eine Windenergieanlagensteuereinheit, die dazu eingerichtet ist, ein vorstehend oder nachstehend beschriebenes Verfahren zum Steuern eines Erzeugers auszuführen und/oder mit einer Hauptsteuereinheit zu kommunizieren, die ein vorstehend oder nachstehend beschriebenes Verfahren zum Steuern eines Verteilnetzes ausführt.

Erfindungsgemäß wird auch ein Windpark vorgeschlagen, der wenigstens eine vorstehend oder nachstehend beschriebene Windenergieanlage umfasst und/oder eine Windparksteuereinheit, die dazu eingerichtet ist, ein vorstehend oder nachstehend beschriebenes Verfahren zum Steuern eines Erzeugers auszuführen und/oder mit einer Hauptsteuereinheit zu kommunizieren, die ein vorstehend oder nachstehend beschriebenes Verfahren zum Steuern eines elektrischen Verteilnetzes ausführt.

Vorzugsweise ist die Windparksteuereinheit dazu eingerichtet, eine vorstehend oder nachstehend beschriebene Hauptsteuereinheit auszubilden.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt eine schematische Ansicht eines Windparks gemäß einer Ausführungsform.
- Fig. 3: zeigt einen schematischen Ablauf eines erfindungsgemäßen Verfahrens in einer Ausführungsform.
- Fig. 4: zeigt schematisch ein elektrisches Verteilnetz mit einem virtuellen Kraftwerk.

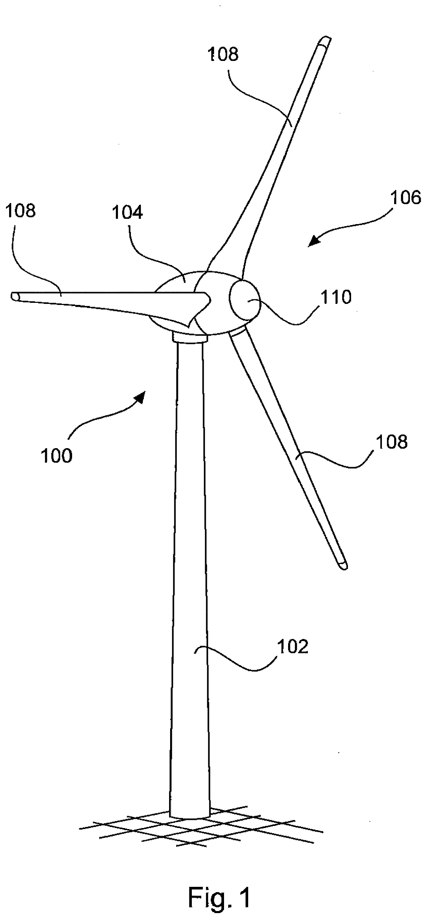

Fig. 1 zeigt eine schematische Ansicht einer Windenergieanlage 100 gemäß einer Ausführungsform.

Die Windenergieanlage 100 weist einen Turm 102 und eine Gondel 104 auf.

An der Gondel 104 ist ein aerodynamischer Rotor 106 mit drei Rotorblättern 108 und einem Spinner 110 angeordnet.

Der Rotor 106 wird im Betrieb durch den Wind in eine Drehbewegung versetzt und treibt dadurch einen Generator in der Gondel 104 an.

Der Generator ist ferner mit einem, insbesondere vorstehend oder nachstehend beschriebenen, Stromrichter verbunden mittels dem die Windenergieanlage elektrische Leistung mit einem elektrischen Versorgungsnetz austauscht.

Die Windenergieanlage ist also insbesondere als umrichterbasierter Einspeiser oder Erzeuger ausgebildet.

Zum Betreiben der Windenergieanlage, und insbesondere des Stromrichters, ist ferner eine vorstehend oder nachstehend beschriebene Steuereinheit vorgesehen, insbesondere, um ein vorstehend oder nachstehend beschriebenes Verfahren zum Steuern eines Erzeugers auszuführen und/oder an einem vorstehend beschriebenen Verfahren zum Steuern eines elektrischen Verteilnetzes teilzunehmen.

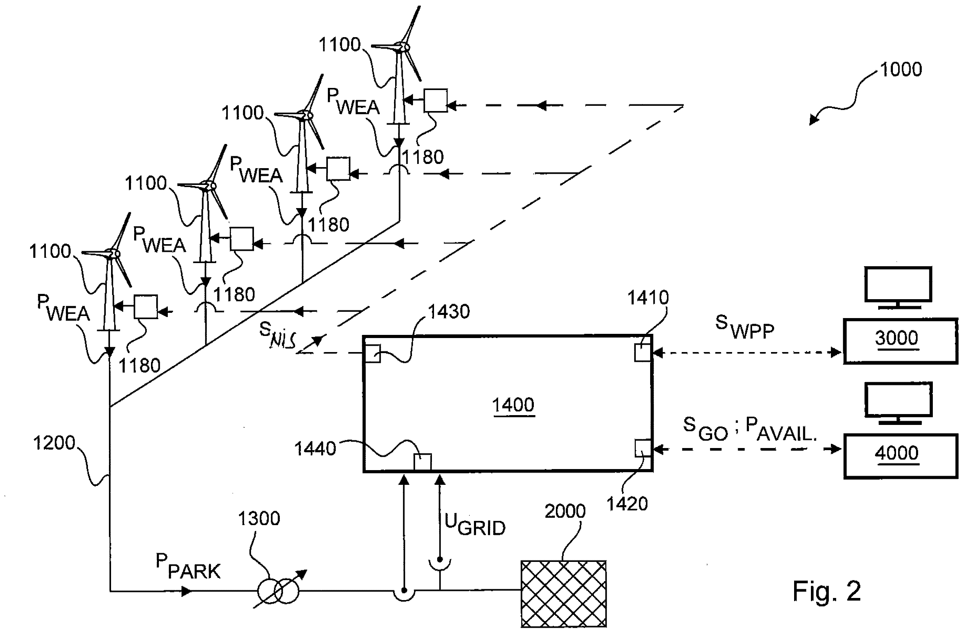

Fig. 2 zeigt einen schematischen Aufbau eines Windparks 1000 gemäß einer Ausführungsform.

Der Windpark 1000 umfasst eine Vielzahl von Windenergieanlagen 1100, wie bspw. in Fig. 1 gezeigt, die über ein gemeinsames Windparknetz 1200 miteinander verbunden sind.

Das Windparknetz 1200 ist mittels eines Windparktransformators 1300 an ein elektrisches Verteilnetz 2000 angeschlossen, um bspw. eine elektrische Windparkleistung Ppark in das elektrischen Verteilnetz 2000 einzuspeisen.

Die elektrische Windparkleistung Ppark ist aus den einzelnen elektrischen Windenergieanlagenleistungen Pwea zusammensetzt.

Die Windenergieanlage 1100 und das Windparknetz1200 bilden zusammen mit dem Windparktransformator 1300 den Leistungsstrang (durchgezogene Linien) aus, also insbesondere jene Baugruppe, die für den Energietransport in das elektrische Verteilnetz verantwortlich sind.

Ferner weist der Windpark 1000 eine Windparksteuereinheit 1400 auf, die dazu eingerichtet ist, den Windpark 1000 zu steuern.

Hierfür ist die Windparksteuereinheit 1400 insbesondere mit den Windenergieanlagensteuereinheiten 1180 der Windenergieanlagen 1100 verbunden.

Der Windpark 1000 weist also neben dem Leistungsstrang (durchgezogene Linien) auch einen Steuer- und Leittechnikstrang (gestrichelte Linien) auf, der nachfolgend beschrieben wird.

Die Windparksteuereinheit 1400 weist eine Vielzahl von Schnittstellen 1410, 1420, 1430, 1440 sowie eine Vielzahl von Betriebsmodi B1, B2, B3, wie bspw. einer Störfallregelung, auf und ist bevorzugt als vorstehend oder nachstehend beschriebe Hauptsteuereinheit ausgebildet.

Die Schnittstelle 1410 ist dazu eingerichtet, Signale an andere Steuereinheiten zu senden, insbesondere an elektrische Anlagen, die ebenfalls demselben virtuellen Kraftwerk zugeordnet sind. Diese Schnittstelle 1410 kann auch als Kommandoschnittstelle bezeichnet werden, insbesondere des virtuellen Kraftwerkes.

Die Schnittstelle 1420 ist dazu eingerichtet, Signale S_{GO} an einen Netzbetreiber 4000 zu senden oder von diesem zu empfangen. Diese Schnittstelle 1420 kann auch als Netzbetreiberschnittstelle bezeichnet werden.

Die Ansteuerung der einzelnen Windenergieanlagen 1100 des Windparks 1000 erfolgt über eine Steuerschnittstelle 1430, die mit den einzelnen Windenergieanlagensteuereinheiten 1180 verbunden ist, bspw. mittels verschiedener Steuersignale S_{NIS}.

Mittels der Schnittstelle 1440 kann die Windparksteuereinheit 1400 die Einspeisung des Windparks und/oder eine Spannung Ugrid im elektrischen Versorgungsnetz 2000 erfassen. Diese Schnittstelle 1440 kann auch als Messschnittstelle bezeichnet werden.

Die Windparksteuereinheit 1400 ist dazu eingerichtet, als vorstehend oder nachstehend beschriebene Hauptsteuereinheit zu fungieren.

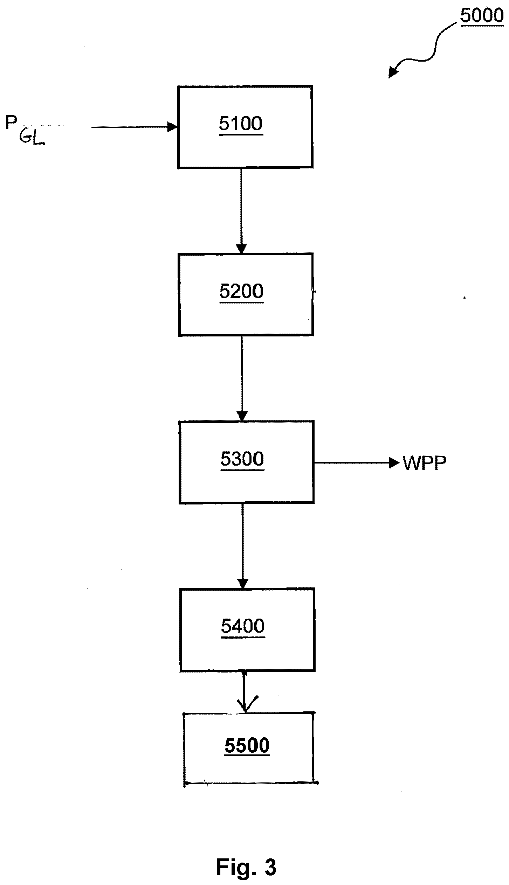

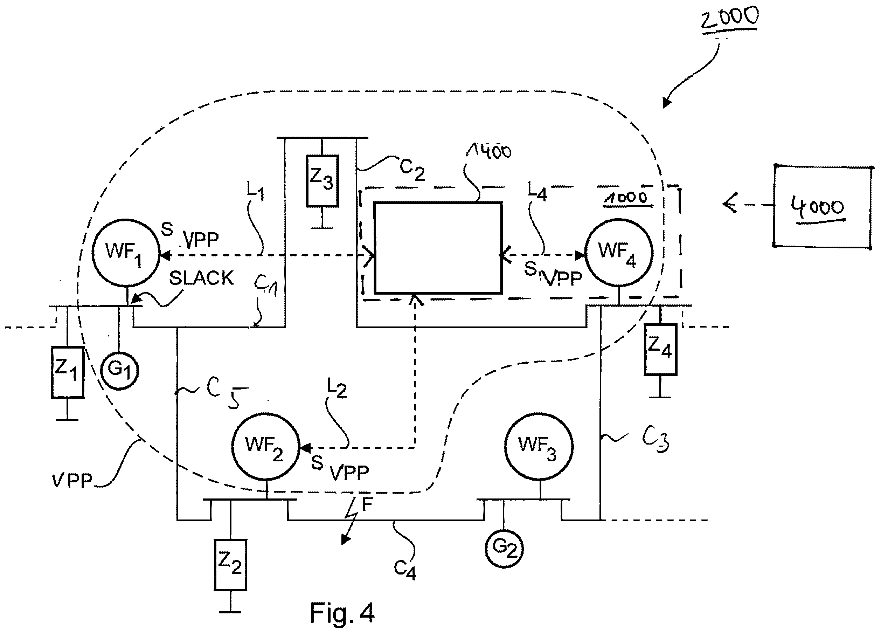

Fig. 3 zeigt einen schematischen Ablauf eines erfindungsgemäßen Verfahrens 5000 zum Steuern eines elektrischen Verteilnetzes, insbesondere wie nachstehend in der Fig. 4 gezeigt.

In einem ersten Schritt 5100 wird wenigstens einer Größe bestimmt, die einen Zustand des elektrischen Verteilnetzes beschreibt, bspw. eine Last des elektrischen Verteilnetzes (kurz: Netzlast) P_{GL} durch den Netzbetreiber.

Daraufhin werden in einem weiteren Schritt 5200 mehrere elektrische Anlagen dynamisch zu einem virtuellen Kraftwerk zusammengefasst.

Zudem wird in einem weiteren Schritt 5300 für dieses virtuelle Kraftwerk ein Regelgebiet innerhalb des elektrischen Verteilnetzes festgelegt.

Basierend darauf wird in einem weiteren Schritt 5400 eine Hauptsteuereinheit festgelegt.

Die Hauptsteuereinheit steuert anschließend in einem weiteren Schritt 5500 das virtuelle Kraftwerk.

Fig. 4 zeigt schematisch ein elektrisches Verteilnetz 2000 mit einem virtuellen Kraftwerk VPP, wobei das elektrische Verteilnetz von einem Netzbetreiber 4000 gesteuert wird.

Das elektrische Verteilnetz 2000 umfasst eine Vielzahl von Verbrauchern Z1, Z2, Z3, Z4, Erzeugern G1, G2 und Windparks WF1, WF2, WF3, WF4, die über Stromleitungen C1, C2, C3, C4, C5 miteinander verbunden sind.

Die Erzeuger G1, G2 sind bspw. konventionelle Kraftwerke, wie bspw. Kohlekraftwerke.

Die Verbraucher Z1, Z2, Z3, Z4 sind bspw. Industriegebäude, Wohnhäuser und dergleichen.

Die Windparks WF1, WF2, WF3, WF4 sind bevorzugt Windparks, wie bspw. in Fig. 2 gezeigt, wobei die Windparks WF1, WF2, WF3, WF4 örtlich voneinander getrennt sind.

Um den Lastfluss im elektrischen Verteilnetz zu steuern, wird ein vorstehend beschriebenes Verfahren ausgeführt.

Dabei werden insbesondere die drei Windparks WF1, WF2, WF4 dynamisch zu einem virtuellen Kraftwerk zusammengefasst und die Steuereinheit 1400 des Windparks WF4 (wie in Fig. 2 dargestellt) wird als Hauptsteuereinheit festgelegt.

Die Hauptsteuereinheit steuert nun bevorzugt das virtuelle Kraftwerk mittels Sollwerten Svpp , insbesondere für alle Windparks WF1, WF2, WF4 des virtuellen Kraftwerks, bevorzugt auf einen bestimmten Punkt bzw. Regelknoten SLACK im elektrischen Verteilnetz.

Die Struktur des virtuellen Kraftwerks VPP ist dabei dynamisch, d.h. im Laufe des erfindungsgemäßen Verfahrens können weitere elektrische Anlagen zum virtuellen Kraftwerk hinzukommen oder ausscheiden.

### Bezugszeichenliste

- 100: Windenergieanlage
- 102: Turm, insbesondere der Windenergieanlage
- 104: Gondel, insbesondere der Windenergieanlage
- 106: aerodynamischer Roter, insbesondere der Windenergieanlage
- 108: Rotorblatt, insbesondere der Windenergieanlage
- 110: Spinner, insbesondere der Windenergieanlage

- 1000: Windpark
- 1100: Windenergieanlage, insbesondere des Windparks
- 1200: Windparknetz, insbesondere des Windparks
- 1300: Windparktransformator, insbesondere des Windparks
- 1400: Windparksteuereinheit. Insbesondere eines Windparks
- 1410: Kommandoschnittelle, insbesondere der Windparksteuereinheit
- 1420: Netzbetreiberschnittstelle, insbesondere der Windparksteuereinheit
- 1430: Steuerschnittstelle, insbesondere der Windparksteuereinheit
- 1440: Messchnittstelle, insbesondere der Windparksteuereinheit
- 2000: elektrisches Verteilnetz
- 4000: Netzbetreiber
- 5000: Verfahrensablauf
- 5100: Verfahrensschritt
- 5200: Verfahrensschritt
- 5300: Verfahrensschritt
- 5400: Verfahrensschritt
- 5500: Verfahrensschritt

- B1, B2, B3: Betriebsmodi, insbesondere der Windparksteuereinheit
- P_{GL}: Netzlast
- Ppark: Windparkleistung
- Pwea: Windenergieanlagenleistungen
- S_{NIS}: Steuersignale, insbesondere der Windparksteuereinheit
- S_{GO}: Signale, insbesondere vom Netzbetreiber
- Ugrid: Spannung des elektrischen Versorgungsnetzes

- C: (Strom-)Leitung
- G: Erzeuger
- Z: Verbraucher
- WF: Windparks
- 1, 2, 3, ...: Indizes
- S_{VPP}: Sollwerte
- VPP: virtuelles Kraftwerk

## Patentansprüche

1. Verfahren zum Steuern eines elektrischen Verteilnetzes, umfassend die Schritte:
- Bestimmen wenigstens einer Größe, die einen Zustand des elektrischen Verteilnetzes beschreibt;
- Zusammenfassen mehrerer elektrischer Anlagen, insbesondere mehrerer regenerativer Erzeuger, des elektrischen Verteilnetzes zu einem virtuellen Kraftwerk, insbesondere unter Berücksichtigung der Größe;
- Festlegen eines Regelgebietes innerhalb des elektrischen Verteilnetzes für das virtuelle Kraftwerk;
- Festlegen einer Steuereinheit einer elektrischen Anlage des virtuellen Kraftwerks als Hauptsteuereinheit;
- Steuern des Regelgebietes mit der Hauptsteuereinheit des virtuellen Kraftwerkes.

2. Verfahren zum Steuern eines elektrischen Verteilnetzes nach Anspruch 1, wobei die Größe wenigstens eine Information der nachfolgenden Liste umfasst, bestehend aus:
- ob ein (n-1)-Kriterium erfüllt ist,
- eine Ausdehnung des elektrischen Verteilnetzes,
- eine aktuelle Gesamtlast des elektrischen Verteilnetzes;
- eine aktuelle Einspeisung innerhalb des elektrische Verteilnetzes, insbesondere der, bevorzugt aller, Erzeuger.

3. Verfahren zum Steuern eines elektrischen Verteilnetzes nach Anspruch 1 oder 2, ferner umfassend den Schritt:
- Wiederholen der Schritte:
- Bestimmen der wenigstens einen Größe, die einen Zustand des elektrischen Verteilnetzes beschreibt;
- Zusammenfassen der mehreren elektrischen Anlagen zu dem virtuellen Kraftwerk;
- Festlegen des Regelgebietes innerhalb des elektrischen Verteilnetzes für das virtuelle Kraftwerk;
- optional: Festlegen einer Steuereinheit einer elektrischen Anlage des virtuellen Kraftwerks als Hauptsteuereinheit;
- Steuern des Regelgebietes mit der Hauptsteuereinheit des virtuellen Kraftwerkes.

4. Verfahren zum Steuern eines elektrischen Verteilnetzes nach wenigstens einem der vorstehenden Ansprüche, wobei
- die Hauptsteuereinheit dazu ausgebildet ist, Sollwerte für weitere Steuereinheiten, insbesondere von Erzeugern und/oder Verbrauchern und/oder Speichersystemen innerhalb des virtuellen Kraftwerkes, vorzugeben, um das virtuelle Kraftwerk zu steuern.

5. Verfahren zum Steuern eines elektrischen Verteilnetzes nach wenigstens einem der vorstehenden Ansprüche, wobei
- die Hauptsteuereinheit dazu ausgebildet ist, mit einer Steuereinheit eines Netzbetreibers oder Vermarkters des elektrischen Verteilnetzes, bevorzugt exklusiv und/oder für das virtuelle Kraftwerk, zu kommunizieren.

6. Verfahren zum Steuern eines elektrischen Verteilnetzes nach wenigstens einem der vorstehenden Ansprüche, wobei
- die Hauptsteuereinheit dazu ausgebildet ist, wenigstens einen der nachfolgenden Parameter einer Liste zu verarbeiten, bestehend aus:
- Betriebszustand der einen elektrischen Anlage, insbesondere des virtuellen Kraftwerks;
- Verfügbarkeit und Prognose der von einer elektrischen Anlage, insbesondere des virtuellen Kraftwerks, zu erbringende Systemdienstleistung;
- Aktuelle Wirk- und/oder Blindleistung einer elektrischen Anlage, insbesondere des virtuellen Kraftwerks;
- Verfügbare Wirkleistung einer elektrischen Anlage, insbesondere des virtuellen Kraftwerks;
- Verfügbare Blindleistung einer elektrischen Anlage, insbesondere des virtuellen Kraftwerks;
- Prognose verfügbarer Leistung und Fahrplan des Regelgebietes;
- SOC-Wert von angeschlossenen Speichersystemen.

7. Verfahren zum Steuern eines elektrischen Verteilnetzes nach wenigstens einem der vorstehenden Ansprüche, wobei
- die Hauptsteuereinheit dazu ausgebildet ist, Sollwerte für weitere Steuereinheiten vorzugeben, insbesondere unter Berücksichtigung wenigstens einem der nachfolgenden Werte einer Liste, bestehend aus:
- Anlagenleistung;
- Auslastung mit anderen Systemdienstleistungen;
- Priorität von anderen Systemdienstleistungen;
- Verfügbare Wirkleistung und/oder Reserve bis zur verfügbaren Leistung;
- Netzsensitivität und/oder Netzauslastung;
- Sensitivität auf einen zu regelnden Punkt, insbesondere den Standort des virtuellen Kraftwerkes, insbesondere zur Spannungshebung innerhalb des Regelgebietes;
- Prognose einer verfügbaren Leistung.

8. Verfahren zum Steuern eines elektrischen Verteilnetzes nach wenigstens einem der vorstehenden Ansprüche, wobei
- die mehren elektrischen Anlagen als Windenergieanlage und/oder als Windpark ausgebildet sind und/oder
- das Zusammenfassen der mehreren Erzeuger in Abhängigkeit einer Größe eines Regelgebietes erfolgt, für welches das virtuelle Kraftwerk zuständig ist.

9. Verfahren zum Steuern eines elektrischen Verteilnetzes nach wenigstens einem der vorstehenden Ansprüche, ferner umfassend die Schritte:
- Durchführen einer, insbesondere automatischen, topologischen Untersuchung des elektrischen Verteilnetzes, insbesondere in Hinblick auf eine Netzstruktur und
- Durchführen von Schalthandlungen innerhalb des elektrischen Verteilnetzes unter Berücksichtigung der topologischen Untersuchung, insbesondere so, dass ein Netzzustand beibehalten wird.

10. Verfahren zum Steuern eines, insbesondere regenerativen, Erzeugers innerhalb eines elektrischen Verteilnetzes, umfassend die Schritte:
- Empfangen eines elektrischen Ortes des Regelgebietes, insbesondere von der Hauptsteuereinheit,
- Empfangen eines Sollwertes, insbesondere von der Hauptsteuereinheit, der einen Sollwert für eine einzuspeisende Wirk- und/oder Blindleistung vorgibt;
- Bestimmen eines elektrischen Abstandes zwischen dem Erzeuger und dem Regelknoten;
- Austauschen einer elektrischen Wirk- und/oder Blindleistung mit dem elektrischen Verteilnetz in Abhängigkeit des Sollwertes und des elektrischen Abstandes.

11. Verfahren zum Steuern eines Erzeugers nach Anspruch 10, wobei
- das elektrische Verteilnetz mittels eines Verfahrens nach wenigstens einem der Ansprüche 1 bis 9 gesteuert wird.

12. Verfahren zum Steuern eines Erzeugers nach Anspruch 10 oder 11, wobei
- das Austauschen unter Berücksichtigung einer Sensitivität des elektrischen Verteilnetzes und/oder eines Freiheitsgrades des elektrischen Verteilnetzes erfolgt.

13. Windenergieanlage umfassend eine Windenergieanlagensteuereinheit, die dazu eingerichtet ist, ein Verfahren nach wenigstens einem der Ansprüche 10 bis 12 auszuführen oder mit einer Hauptsteuereinheit zu kommunizieren, die ein Verfahren nach einem der Ansprüche 1 bis 10 ausführt.

14. Windpark wenigstens umfassend eine Windenergieanlage nach Anspruch 13 oder eine Windparksteuereinheit, die dazu eingerichtet ist, ein Verfahren nach wenigstens einem der Ansprüche 10 bis 12 auszuführen oder mit einer Hauptsteuereinheit zu kommunizieren, die ein Verfahren nach einem der Ansprüche 1 bis 10 ausführt.

15. Windpark nach Anspruch 14, wobei die Windparksteuereinheit dazu eingerichtet ist, eine Hauptsteuereinheit auszubilden, die ein Verfahren nach einem der Ansprüche 1 bis 10 ausführt.
